# EUROPEAN PATENT APPLICATION

(11) **EP 4 467 218 A1**
(43) Date of publication of application: **27.11.2024**
(21) Application number: 24150841.5
(22) Date of filing: 09.01.2024
(51) Int. Cl.: B01D 29/00, D21F 7/00, D21J 7/00

(54) **MOULD FOR THE PRODUCTION OF SUSPENSION PRODUCTS**

(30) Priority: 25.05.2023 CZ 20230211
(71) Applicant: VÚTS, a.s., Liberec XI - Ruzodol I 460 01 Liberec (CZ)
(72) Inventor: Leskovjan, Martin, 747 87 Budisov nad Budisovkou (CZ); Votrubec, Vlastimil, 460 14 Liberec (CZ); Kolar, Jan, 460 14 Liberec (CZ)
(74) Representative: Musil, Dobroslav

(57) **Abstract**

The invention relates to a mould for producing products from a suspension of solid particles and/or fibres in a liquid, which comprises a filter layer (1) permeable to the liquid component of the suspension, wherein the filter layer (1) is formed by a regular omnidirectionally open porous structure (2) with interconnected pores (21a, 21b).

## Description

### Technical field

The invention relates to a mould for producing products from a suspension of solid particles and/or fibres in a liquid, which comprises a filter layer permeable to the liquid component of the suspension.

### Background art

One of the methods for producing thin-walled moulded products is to produce them from a suspension of solid particles and/or fibres in a liquid using a sucked porous mould. The production of the product takes place in such a way that the mould is immersed in the suspension by the outer moulding surface of its filter layer and the liquid component of the suspension is sucked out of the suspension from the opposite side of the mould through the filter layer by means of a suction device, whereby a porous layer of solid particles and/or fibres contained in the suspension, such as a layer of paper pulp, glass fibres, textile fibres, etc., is gradually captured on the outer moulding surface, thereby forming the product. The product thus formed can then be further processed, e.g. by drying, pressing, etc. In particular, thin-walled moulded products which may or may not be porous, such as packaging, insulating layers, filters, etc., are produced in this manner. The filter layer of the mould is usually formed by a mesh, e.g. a metal screen, which is mounted on an internal reinforcement arranged in the inner space of the mould, which supports the filter layer and protects it from unwanted deformation. The internal reinforcement is provided with holes through which the liquid component of the suspension is extracted from the filter layer through the inner space of the mould into the suction hole of the mould and further out of the mould into the suction device.

Currently, moulds for producing suspension products are usually made of several parts that are made of different materials and are connected by a connecting material. Their production is therefore relatively lengthy, complex and requires a plurality of different parts, materials and technological processes. The disadvantage of such moulds is also their difficult recyclability. The filter layer of the moulds is typically made of a metal screen which is, during the production of the mould, spatially moulded to adapt to the shape of the mould insert, which requires a high proportion of manual labour and considerable manual skill. In addition, another disadvantage is that the internal reinforcement of the mould is, due to the high level of labour involved in its production, provided with relatively large holes for extracting the liquid component of the suspension, the holes being arranged at relatively large intervals. Because of this, uneven pressure distribution and uneven pressure gradient occur during the suction of the liquid component of the suspension from the filter layer, which may lead to an undesirable uneven deposition of solid particles and/or fibres of the suspension on the outer moulding surface of the filter layer and thus create a product with uneven thickness. Further disadvantages include difficult repairability and a lengthy production process, which prolongs the delivery of end products to the customer.

The above disadvantages are partially eliminated by a mould disclosed in US2022018071A1, which comprises a filter layer comprising a set of small holes, below which is arranged a reinforcement layer with holes. The perforated filter layer and the reinforcement layer are arranged at a distance from each other defined by spacer protrusions, as a result of which transverse channels are formed between them in the inner space of the mould for redistributing the pressure of the liquid component of the suspension sucked through the filter layer. The disadvantage of this mould design is generally lower porosity and therefore higher pressure loss of the filter layer itself. This results in higher energy requirements for the vacuum source or increases the suction time. In order to achieve the desired porosity of the perforated outer moulding surface, it is possible to provide such a filter layer with holes of a larger diameter, which, however, leads to a coarser surface texture of the manufactured product and complicates the production of the mould. In addition, in order to provide sufficient strength of the mould, the larger holes must be spaced at greater intervals, which reduces the porosity of the filter layer.

Furthermore, document US2981330A discloses a mould for making an egg-tray from paper pulp, which comprises a porous filter layer formed by a porous omnidirectionally open structure consisting of a layer of spherical particles (e.g. sand grains) interconnected by resin. The disadvantage of such a mould is that its porous filter layer is formed by a random, irregular porous structure of randomly arranged particles of different sizes, so it is very difficult to achieve a chosen porosity of the filter layer in its entire volume, or different porosities in different parts thereof. Another disadvantage is the complexity of production and the difficulty of recycling the mould, which contains a variety of materials (metal, glass, sand, resin, etc.). Yet another disadvantage is that the porous filter layer is cast and cured in a master mould, which is relatively expensive and time-consuming to produce and has a limited lifetime.

The objective of the invention is to propose a mould for producing products from a suspension of solid particles and/or fibres in a liquid, which would eliminate or at least mitigate the disadvantages of the background art.

### Summary of the invention

The above drawbacks are addressed by the invention of a mould for producing suspension products according to the invention, wherein the filter layer comprises a regular omnidirectionally open porous structure with interconnected pores. Such a mould can be produced, easily and cost-effectively, for example by 3D printing technology, wherein the pores of its filter layer in principle connect opposite surfaces of the filter layer in its entire volume, regardless of the spatial shaping of these parts and their mutual orientation.

The filter layer of the mould is preferably formed by a gyroid structure with interconnected curved pores. The advantage of this structure is especially the fact that its curved pores connect the opposite surfaces of the filter layer in the entire volume of the layer, regardless of their spatial shaping and their relative orientation, wherein the porosity of all selected parts of the surfaces can be the same and can be easily adapted to the desired porosity and/or surface roughness and/or the layer thickness of the moulded product. This is advantageous especially for moulds whose outer moulding surface is convex and/or hollow and/or contains surfaces that form an acute angle with each other.

Preferably, the filter layer has constant porosity in its entire volume. This will ensure both easy production of the filter layer and uniform permeability of this layer to the liquid component of the suspension.

The filter layer has preferably in at least two of its parts mutually different thicknesses to achieve the required pressure gradient of the liquid component of the suspension and this ensures the required thickness of the layer of solid particles and/or fibres depositing on different parts of the outer moulding surface of the mould.

Preferably, the above-described mould has the shape of the lateral surface of a rotating body, such as a cylinder.

All the convex and concave surfaces of the filter layer of the mould according to the invention are fluidly interconnected pores, wherein their porosity can be selected as constant or as mutually different, according to the selected type of omnidirectionally open porous structure and according to the selected porosity of different parts of the omnidirectionally open porous structure.

Where necessary, the mould according to the invention is spatially shaped, for example, it is provided on its outer moulding surface with at least one protrusion and/or at least one depression, at least one stepped part, etc. Different parts of the outer moulding surface of the filter layer of the mould optionally have the same or different porosity, according to the type of regular omnidirectionally open porous structure selected and according to the selected porosity of different parts of the omnidirectionally open porous structure.

As needed, the filter layer of the mould is arranged on the reinforcement layer, which is permeable to the liquid component of the suspension. The reinforcement layer may or may not be arranged below the entire filter layer for its full/partial support, depending on the need, the shape of the mould, the amount of pressure exerted on the filter layer by the suspension, etc.

The reinforcement layer permeable to the liquid of the suspension is preferably formed by a regular omnidirectionally open porous structure with interconnected pores, which provides firm support to the filter layer, allows uniform permeation of the liquid suspension component through the reinforced inner space and is easily manufacturable, e.g., by 3D FDM (Fused Deposition Modelling) printing.

In a preferred variant of embodiment, for highly efficient pressure and flow balancing of the liquid extracted from the filter layer through the inner space of the mould, the reinforcement layer is formed by a gyroid structure with interconnected curved pores. The porosity and/or pore diameter of the reinforcement layer is preferably higher than that of the filter layer.

### Brief description of drawings

In the enclosed drawing, Fig. 1 shows a schematic perspective view of an exemplary embodiment of a mould according to the invention, Fig. 1a shows schematically a longitudinal cross-section A-A of the mould of Fig. 1, and Fig. 1b schematically represents a cross-section B-B of this mould. Fig. 2 schematically represents a longitudinal cross-section of the variant of the mould according to the invention with a filter layer formed by a gyroid structure, and Fig. 2a shows schematically a cross-section B`-B` of this mould. Fig. 3 schematically represents a perspective view of another variant of the mould according to the invention, and Fig. 3a shows schematically a cross-section C-C of this mould. Fig. 4 shows schematically a perspective view of another exemplary embodiment of the mould according to the invention, Fig. 4a shows schematically a cross-section D-D of this mould and Fig. 4b schematically represents a cross-section D-D of a variant of the form according to Fig. 4 in an embodiment with a reinforcement layer formed by a gyroid structure. Fig. 5 shows schematically a perspective view of a gyroid structure with interconnected curved pores, Fig. 5b shows schematically a detail of the gyroid structure, and Fig. 6 shows schematically a perspective view of the rectangular structure with interconnected straight pores.

### Examples of embodiment

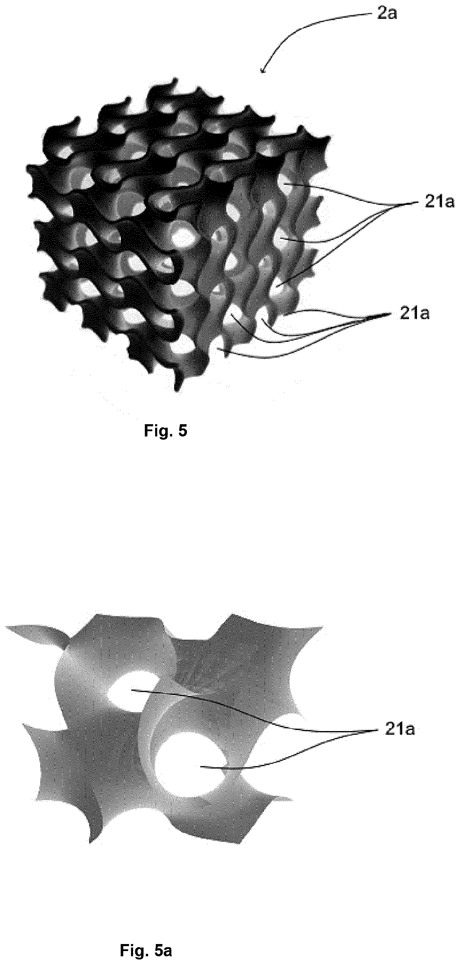

The mould for the production of products from a suspension of solid particles and/or fibres in a liquid according to the invention comprises a filter layer 1, which is permeable to the liquid component of the suspension and which is formed by a regular omnidirectionally open porous structure 2 with interconnected pores 21a, 21b (Fig. 5, 5a a 6) and whose outer moulding surface 11 is intended for capturing solid particles and/or fibres of the suspension in a layer 5 and forming the product.

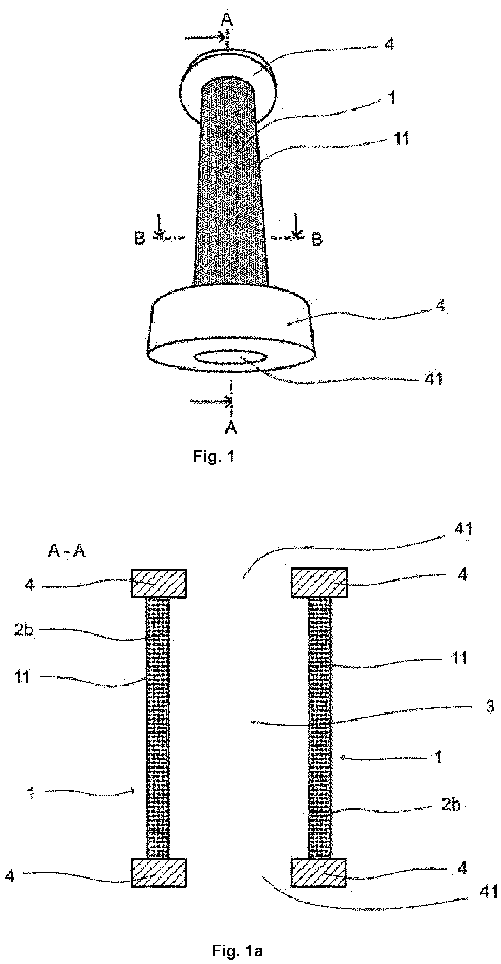

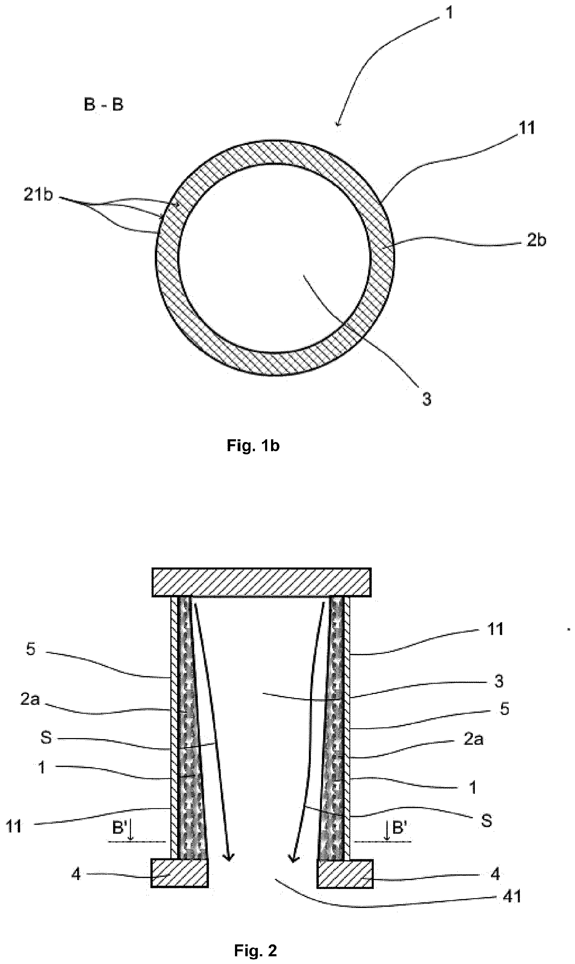

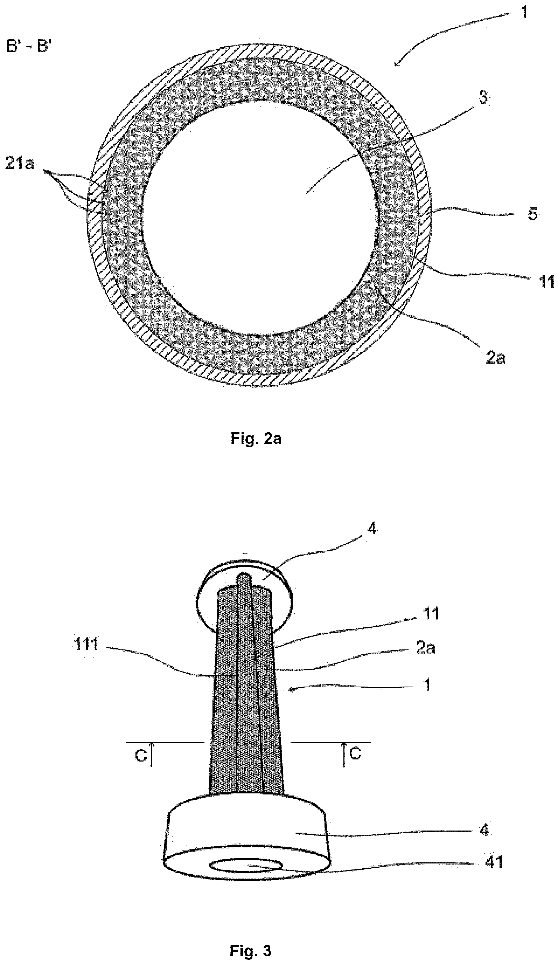

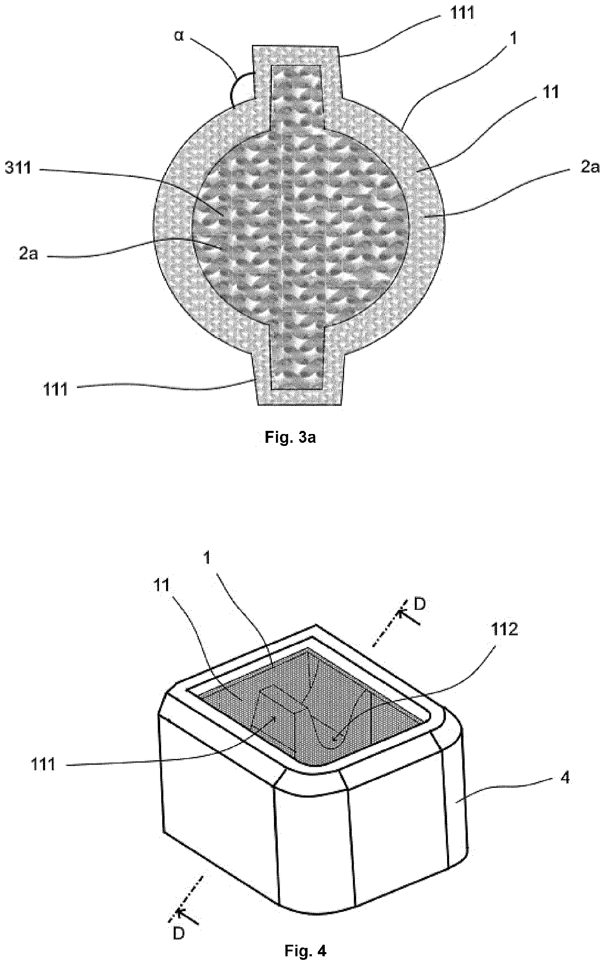

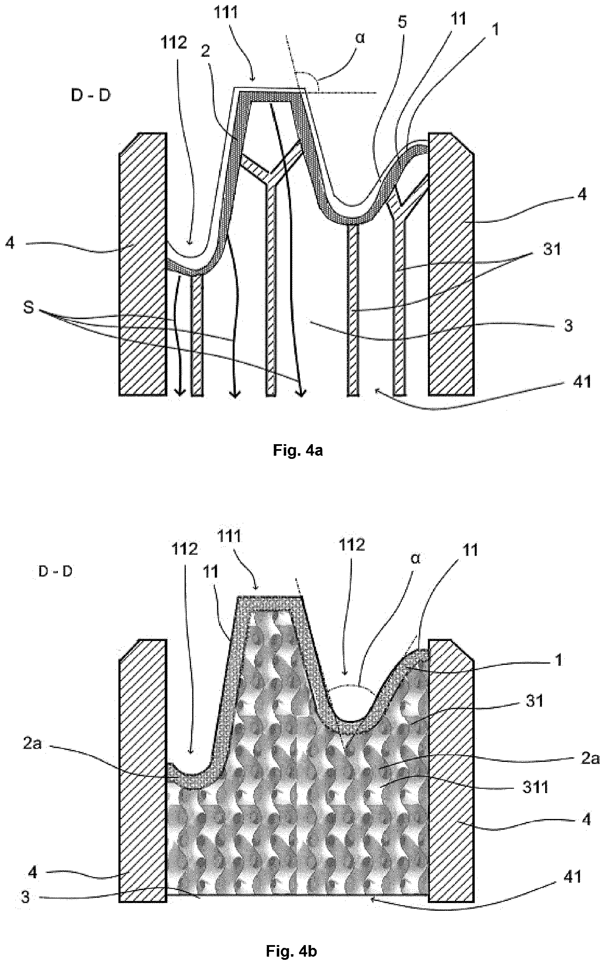

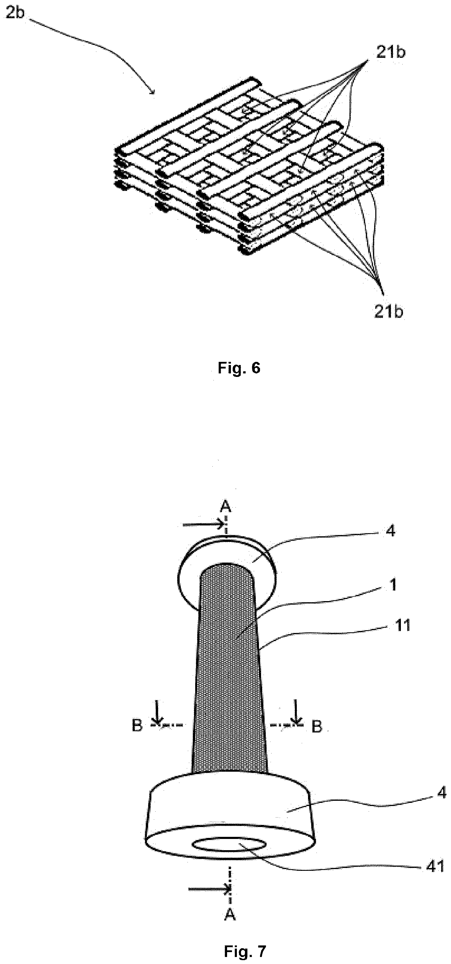

The regular omnidirectionally open porous structure 2 with interconnected pores 21a, 21b is preferably formed by, for example, a structure consisting of a plurality of units with a triple surface, which are periodically repeated. An example of such a structure is, for example, a gyroid structure 2a (Fig. 5) with interconnected curved pores 21a, which is formed by periodic repetition of gyroid units (Fig. 5a). Another example is, e.g., an unillustrated lidinoid structure with interconnected curved pores 21a, with a Schwarz minimum surface with interconnected pores 21a, 21b etc., or a rectangular structure 2b with interconnected straight pores 21b (see Fig. 6) or an unillustrated "zigzag"structure with interconnected wavy pores, etc. Due to their design, the pores 21a, 21b of all these structures connect the opposite surfaces of the formations created from these structures in the entire surface, regardless of their spatial shaping, their mutual orientation and the orientation of their different parts. This is advantageous especially in variants of the mould according to the invention, which comprise convex surfaces (see Figs. 1, 1a, 1b, 2, 2a, 3, and 3a) on the outer moulding surface of the filter layer 1) or surfaces that form an angle α to up to 135° (see Figs. 3a, 4a and 4b), since, in order to achieve the desired porosity, there is no need to change the orientation of the pores 21a, 21b of the filter layer 1 by bending it, making it from several parts with differently oriented pores, etc. Especially in the variant of the filter layer 1 consisting of a gyroid structure 2a, the porosity of the entire outer moulding surface 11 of the filter layer 1 is the same in all its parts, regardless of its spatial shaping and the mutual orientation of its different parts, and the opposite surfaces of the filter layer 1 are fully fluidly interconnected (see Fig. 4b).

The filter layer 1 formed by a gyroid structure 2a has an advantageous large ratio of the volume of the curved pores 21a relative to the volume of the filling, and thus a relatively high flow rate, which makes it possible to use for the filter layer 1 of the mould a gyroid structure with a small pore diameter (in the order of tenths to units of a millimetre) to capture smaller solid particles from the suspension to achieve a smoother and possibly more complexly shaped surface of the product.

The entire filter layer 1 formed by a gyroid structure 2a is preferably produced as a single piece by the 3D FDM (Fused Deposition Modelling) technology. The advantage of the gyroid structure 2a is that less material is needed to produce the filter layer 1 created from it than to create the filter layer 1 formed by other types of regular omnidirectionally open porous structures 2.

Another advantage of such a filter layer 1 is its easy production, whereby in order to achieve the selected pressure gradient of the sucked liquid component of the suspension and thus to achieve the selected thickness of the product on the outer moulding surface 11, it is sufficient only to adjust the thickness of the filter layer 1 (Figs. 2 and 4a).

If necessary, the filter layer 1 may be configured in such a way that its porosity increases in the direction from the outer moulding surface 11 inwards, which makes it possible to achieve the selected pressure gradient of the suctioned liquid component of the suspension, while maintaining the advantageous thickness, and thus the strength, of the filter layer 1 and/or maintaining the advantageous size of the pores 21a, 21b in order to achieve a smoother and possibly more complexly shaped surface of the product.

To create a product of the desired shape, the filter layer 1, or its outer moulding surface 11, is suitably shaped. For example, it has the shape of the lateral surface of a rotating body, e.g., a cylinder (Figs. 1, 2 and 3), or it is formed by a spatially shaped plate, wherein on its outer moulding surface 11 it comprises the required shaping - for example, as needed, a system of protrusions 111 and/or depressions 112 (Fig. 4), etc.

The suitable thickness of the filter layer 1 ranges from 1 mm to 20 mm, more preferably from 1 mm to 9 mm, wherein the filter layer 1 may have different thicknesses in different parts, e.g., to achieve the required pressure gradient/liquid flow and thus to capture a layer 5 of solid material of the required thickness.

For example, a mould with a filter layer 1 formed by a spatially shaped plate (Figs. 4, 4a, 4b) works in such a way that the solid particles from the suspension are deposited on the surface of the filter layer 1 during suction, while the liquid component of the suspension flows in the S direction from the filter layer 1 (see Fig. 4a), through the inner space 3 of the mould, into the suction hole/holes 41. If such a mould has a filter layer 1 of constant thickness, the flow rate of the liquid sucked from the filter layer 1 is substantially the same in all parts along the filter layer 1, and therefore a layer 5 of solid material of constant thickness is captured on the outer moulding surface 11. To achieve mutually different thicknesses of the layer 5 of the solid material in different parts of the product, the mould with a filter layer 1 formed by a spatially shaped plate, shown in the variant in Fig. 4a, is, for example, provided with a filter layer 1 which has in at least two of its parts mutually different thicknesses. The liquid flow rate through part of the filter layer 1 with a larger thickness is, due to the larger pressure loss, less than the flow rate through the part of the filter layer 1 with a smaller thickness, thereby achieving a different amount of solid suspension material that is captured on different parts of the outer moulding surface 11 of the filter layer 1, and thus different thicknesses of the final product in different places are achieved.

For example, the mould with a filter layer 1 in the shape of the lateral surface of a rotating body, such as a cylinder (Figs. 1, 2 and 3), operates in such a way that solid particles from the suspension are deposited on the surface of the filter layer 1 during suction, while the liquid component of the suspension flows in the direction S along of the filter layer 1 (see Fig. 2), into the suction hole/holes 41. If such a mould is provided with a filter layer 1 of constant thickness, the pressure in the inner space 3 of the mould, along the filter layer 1 towards the suction hole 41, decreases, thereby increasing the pressure gradient/liquid flow rate through the filter layer 1 at part/parts situated in the vicinity of the suction hole 41, while decreasing it at the part/parts situated further away from the suction hole 41. This also reduces the rate at which the solid parts of the suspension are captured on the outer moulding surface 11 at the part/parts situated further away from the suction hole 41, which can lead to the formation of a layer of captured solid material with an undesirable uneven thickness. In order to achieve the constant thickness 5 of the solid material in different parts of the product, the mould shown in the variant in Fig. 2 is, for example, provided with a filter layer 1, whose thickness increases towards the suction hole 41. Due to the greater pressure loss of the filter layer 1 at the part of greater thickness, a constant pressure gradient is achieved along the entire length of the filter layer 1, so that a layer 5 of solid material of constant thickness is captured along the entire length of the mould on the outer moulding surface 11 of the filter layer 1 (Fig. 2). This embodiment of the filter layer 1 is advantageous especially for moulds for producing elongated, especially porous products in the shape of the lateral surface of a rotating body, e.g. cylindrical filters, cone filters, etc.

The mould for producing products for a suspension of solid particles and/or or fibres in a liquid with a filter layer 1 formed by a regular omnidirectionally open porous structure 2 with interconnected pores 21a, 21b preferably comprises at least one connecting element 4 with at least one suction hole 41 (Figs. 1, 1a, 2, 3, 4a and 4b) for the fluid connection of the unillustrated suction device. Between the filter layer 1 and the connecting element 4, the inner space 3 of the mould is created for directing the liquid component of the suspension sucked from different parts of the filter layer 1 into the suction hole/holes 41.

Preferably, e.g., in variants of embodiment shown in Figs. 3a, 4a and 4b, the mould for shaping the products is provided in its inner space 3 with an internal reinforcement 31 reinforcing the porous filter layer 1 against collapse due to the pressure exerted on it during the suction of the liquid component of the suspension. Such an internal reinforcement 31 is permeable to the liquid component of the suspension and is formed, for example, by partitions (Fig. 4a), tubes, plates, perforated plates, a reinforcement layer 311 permeable to the liquid of the suspension (Figs. 3a and 4b), etc. In a preferred embodiment, shown in Fig. 4b, the reinforcement layer 311 is permeable to the liquid component of the suspension and is formed by a regular omnidirectionally open porous structure 2 with interconnected pores 21a, 21b, preferably having a gyroid structure 2a with interconnected curved pores 21a. Preferably, the porosity of the reinforcement layer 311 formed by a gyroid structure 2a is larger than the porosity of the filter layer 1, so that the liquid from the suspension flows through the reinforcement layer 311 evenly and with little pressure loss, the pressure of the liquid being redistributed and homogenized in the vicinity of the porous filter layer 1. This results in a liquid pressure gradient in the filter layer 1 which is close in its size to the pressure gradient in the filter layer 1 of the mould with an empty inner space 3. At the same time, such a reinforcement layer 311 is strong enough to reinforce the filter layer 1, even in large moulds. The reinforcement layer 311 consisting of a regular omnidirectionally open porous structure 2 can be easily and economically produced in one step from a single piece.

The reinforcement layer formed by a regular omnidirectionally open porous structure 2 with interconnected pores 21a, 21b preferably fills the entire inner space 3 of the mould - see Figs. 3a and 4b.

The internal reinforcement 31 and the connecting element 1 are preferably made from a single piece. Preferably, the filter layer 1 is connected detachably to the internal reinforcement 31 and/or to the connecting element 4, in order to facilitate the exchange of the filter layer 1, e.g., in the event of damage.

In another embodiment, the porous filter layer 1, the internal reinforcement 31 (if the mould is provided with it) and the connecting element 4 are exemplarily made from a single piece of material. Such a mould is not only easy and economical to produce, but it is also compact and seals well.

In particular, for smaller moulds in the shape of the lateral surface of a rotating body (see Figs. 1a, 1b, 2 and 2a), the internal reinforcement 31 may be omitted and such a mould contains an empty inner space 3. Such a mould is, thanks to its shape, sufficiently resistant to the pressure exerted on it by the suction of the liquid component of the suspension.

The filter layer 1 and/or the internal reinforcement 31 and/or the connecting element 4, alternatively, the entire mould for moulding the suspension products is preferably made from one or more pieces by additive 3D FDM (Fused Deposition Modelling) printing technique in all the above-described embodiments. The suitable materials for mould making are mainly acrylonitrile butadiene styrene (ABS), polycarbonate (PC), polylactide (PLA), polyethylene (PE), high density polyethylene (HDPE), polyethylene terephthalate-1, 4-cyclohexylene dimethylene terephthalate (PETG), polyethylene terephthalate (PET), polypropylene sulphone (PPSU), tough polystyrene (HIPS, HPS, PSH), thermoplastic elastomer (TPE), nylon, etc., according to the need, the size of the mould, the shape of the mould, whether it is a one-piece mould or a multi-piece mould, and whether or not the mould comprises an internal reinforcement 31.

The regular omnidirectionally open porous structure 2 of the filter layer 1, is produced, for example, as an omnidirectionally open porous filling with a porosity of 10 % to 70 %, more preferably 10 % to 60 %, even more preferably as an omnidirectionally open porous gyroid filling with a porosity of 10 % to 30 %.

The regular omnidirectionally open porous structure 2 of the reinforcement layer 311 is produced, for example, as an omnidirectionally open porous filling with a porosity of 50 % to 95 %, more preferably 60 % to 95 %, even more preferably as an omnidirectionally open porous gyroid filling with a porosity of 70 % to 90 %.

If the device for producing the porous structure 2 is not provided with means for setting the porosity of the printed filling, the porosity of the filling is selected as a complement to the density of the filling up to 100 %, e.g., for a desired porosity of 60 %, a filling value of 40 % is selected on the 3D FDM printer, for a desired porosity of 20 %, a filling value of 80 % is selected, etc.

The connecting element 4 is produced, for example, as a non-porous element.

### List of references

- 1: filter layer
- 11: outer moulding surface
- 111: protrusion
- 112: depression
- 2: regular omnidirectionally open porous structure
- 2a: gyroid structure
- 2b: rectangular structure
- 21a: curved core
- 21b: straight pore
- 3: inner space of the mould
- 31: internal reinforcement
- 311: reinforcement layer
- 4: connecting element
- 41: suction hole
- 5: layer of captured solid material
- α: angle of the surfaces of the outer porous moulding surface
- S: direction of liquid flow through the inner space of the mould

## Claims

1. A mould for producing products from a suspension of solid particles and/or fibres in a liquid, which comprises a filter layer (1) permeable to the liquid component of the suspension, **characterized in that** the filter layer (1) is formed by a regular omnidirectionally open porous structure (2) with interconnected pores (21a, 21b).

2. The mould according to 1, **characterized in that** the filter layer (1) is formed by a gyroid structure (2a) with interconnected curved pores (21a).

3. The mould according to 1 or 2, **characterized in that** the filter layer (1) has constant porosity in its entire volume.

4. The mould according to 1, 2 or 3, **characterized in that** the filter layer (1) has different thicknesses in at least two parts.

5. The mould according to any of the preceding claims, **characterized in that** has the shape of the lateral surface of a rotating body.

6. The mould according to 5, **characterized in that** has a shape of the lateral surface of a cylinder.

7. The mould according to any of the preceding claims, **characterized in that** the filter layer (1) is spatially shaped.

8. The mould according to any of the preceding claims, **characterized in that** the filter layer (1) is arranged on a reinforcement layer (311) permeable to the liquid of the suspension.

9. The mould according to 8, **characterized in that** the reinforcement layer (311) is formed by a regular omnidirectionally open porous structure (2) with interconnected pores (21a, 21b).

10. The mould according to 8, **characterized in that** the reinforcement layer (1) is formed by a gyroid structure (2a) with interconnected curved pores (21a).
